# FASCICULE DE BREVET EUROPEEN

(11) **EP 4 228 929 B1**
(45) Date de publication et mention de la délivrance du brevet: **12.06.2024**
(21) Numéro de dépôt: 21807173.6
(22) Date de dépôt: 13.10.2021
(51) Int. Cl.: B60R 19/18, B60R 21/34

(54) **ARMATURE DE PARE-CHOCS MUNIE DE ZONES FRANGIBLES**
STOSSFÄNGERVERSTÄRKUNG MIT ZERBRECHLICHEN BEREICHEN
BUMPER REINFORCEMENT PROVIDED WITH FRANGIBLE ZONES

(30) Priorité: 19.10.2020 FR 2010701
(43) Date de publication de la demande: 23.08.2023
(73) Titulaire: Stellantis Auto SAS, 78300 Poissy (FR)
(72) Inventeur: BOUDAN, Julien, 91210 DRAVEIL (FR)
(86) Numéro de dépôt international: PCT/FR2021/051776
(87) Numéro de publication internationale: WO 2022/084603

(56) Documents cités:
- EP-A1- 1 595 755
- EP-A1- 2 511 119
- FR-A1- 2 853 291
- FR-A1- 2 897 812
- FR-A1- 2 919 566
- FR-A1- 3 063 480
- JP-A- 2019 043 419

## Description

L'invention concerne une armature de pare-chocs avant de véhicule, ainsi qu'un véhicule équipé d'une telle armature de pare-chocs.

L'avant d'un véhicule comporte généralement un pare-chocs comportant une peau de pare-chocs, deux projecteurs avant disposés de part et d'autre de la face avant du véhicule, ainsi qu'un capot moteur dont la partie avant, classiquement nommé nez de capot, est à proximité de la partie haute de la peau de pare-chocs. Un élément de décoration de type calandre est parfois disposée entre le nez de capot et la partie haute de la peau de pare-chocs.

Il est connu de placer derrière la peau de pare-chocs avant du véhicule une armature de pare-chocs. Cette armature de pare-chocs est un élément rigide sur lequel se fixe la peau de pare-chocs. Elle permet de maintenir en forme la peau de pare-chocs qui est généralement réalisée par une pièce en matériau plastique souple de faible épaisseur. La peau de pare-chocs se fixe sur cette armature. De plus, cette rigidité de l'armature de pare-chocs permet d'y fixer des accessoires, comme par exemple un klaxon ou des faisceaux électriques. Cette armature comporte une partie s'étendant au moins derrière la peau de pare-chocs, remontant entre les deux phares avant du véhicule, et comporte une partie qui s'étend jusque sous le nez de capot de sorte à cacher des éléments technique lorsqu'un utilisateur ouvre le capot. Elle est généralement fixée d'un côté sur un support supérieur de radiateur.

La rigidité de cette armature de pare-chocs est un inconvénient en cas de choc avant contre un piéton. En effet, il génère des points durs en cas de choc contre un piéton qui crée des efforts important sur le piéton. En particulier, lors d'un choc de la tête contre le capot, l'armature crée un point dur contre lequel le capot bute et descend vers le bas suite au choc.

Le document JP2019043419 décrit un véhicule comportant une armature de pare-chocs derrière une peau de pare-chocs. Le document FR 2 853 291 A1 divulgue une armature de pare-chocs conforme au préambule de la revendication 1.

L'objectif de l'invention est de remédier à ces inconvénients. En particulier, un des buts de l'invention est d'améliorer la protection en cas de choc piéton.

Ce but est atteint selon l'invention, grâce à une armature de pare-chocs avec les caractéristiques de la revendication 1.

Ainsi, en disposant des butées sur le capot en vis-à-vis des surfaces frangibles, en cas de choc tête, lesdites zones frangibles vont se séparer de la paroi supérieure sous les efforts des butées et permettre un déplacement du capot plus important. Ce déplacement plus important du capot sous l'effort du choc permet de réduire les efforts subits par le piéton au moment du choc, et donc de réduire les risques de blessures. Les jambes d'appui permettent d'améliorer la raideur de l'armature, et son maintien, en cas d'appui du capot sur la paroi supérieure, et de mieux contrôler le niveau d'effort à partir duquel les surfaces frangibles se séparent de la paroi supérieure. De plus, si un utilisateur appui sur le capot avec la main, les butées étant contre les parois frangibles, ou sur la paroi supérieure lorsque le capot est ouvert, la sensation de raideur est plus élevée, et la sensation de qualité améliorée. De plus, cette raideur élevée du maintien de la paroi supérieure permet de former un appui plus efficace pour limiter le sur-claquage du capot lors de sa fermeture. Le sur-claquage est le fait que certaines parties du capot, sous le choc de la fermeture dudit capot, descendent plus bas que la position fermée du capot, générant un risque de venir taper des éléments de carrosserie autour de lui.

Les extrémités des jambes d'appuis comportent de préférences des moyens de fixation à la poutre de pare-chocs.

Dans un mode de réalisation préféré de l'invention, les jambes d'appui s'étendent dans une direction sensiblement perpendiculaire à la paroi supérieure.

Ainsi avantageusement, les jambes sont mieux disposées pour résister aux efforts d'appuis, ces efforts étant verticaux par rapport au véhicule sur lequel est installée une telle armature, la paroi supérieure s'étendant sensiblement horizontalement et les jambes d'appuis sensiblement verticalement par rapport au véhicule.

Dans un autre mode de réalisation de l'invention, chacune des surfaces frangibles sont des zones de la paroi supérieure entourées de rainures traversant la paroi supérieure, lesdites rainures étant séparées entre elle de sorte à former des pattes de fixation frangibles reliant chacune des surfaces frangibles à la paroi supérieure.

Ainsi avantageusement, les zones frangibles sont faites de manières très simple.

Dans un autre mode de réalisation de l'invention, les surfaces frangibles et les zones frangibles les entourant sont dans des renfoncements de la paroi supérieure, formant des creux vers le coté de la paroi supérieure dans lequel s'étendent des jambes d'appui.

C'est-à-dire qu'en positionnant les jambes d'appui de sortent que la paroi supérieure soit située au-dessus desdites jambes, les renfoncements sont des creux, c'est-à-dire des reliefs en creux, orientés vers le bas, du côté des jambes. Ces renfoncements permettent avantageusement de récupérer des écoulements d'eau de pluie de la paroi supérieure et d'écouler cette eau de l'autre côté de la paroi supérieure via les rainures traversantes.

Selon l'invention, les extrémités des jambes d'appuis opposées à la paroi supérieure sont reliées entre elles par une branche de liaison, de section en « L » agencée de sorte que la section en « L » soit destinée à recouvrir une arête d'une poutre de pare-chocs.

Ainsi avantageusement, l'armature est plus stable en cas d'application d'effort sur la paroi supérieure et les vibrations de l'armature sont diminuées, grâce à la branche de liaison qui augmente la raideur de l'armature au niveau des jambes. La réduction des vibrations permet de réduire les risques de bruit parasites.

De préférence, la paroi supérieure, les jambes et la branche de liaison forme une seule pièce issue de matière. C'est-à-dire que l'armature est faite d'une seule pièce.

L'invention porte aussi sur un véhicule comportant une poutre de pare-chocs et une armature de pare-chocs tel que décrit précédemment, dont les extrémités des jambes d'appuis sont fixées à la poutre de pare-chocs.

Dans un mode de réalisation préféré de l'invention portant sur le véhicule, la branche de liaison est de section en « L » tel que décrit précédemment, la poutre de pare-chocs comporte une face avant orientée vers l'avant du véhicule, s'étendant sensiblement parallèlement à un axe vertical Z du véhicule, une face supérieure formant un angle, de préférence droit, avec la face avant et disposée le long du bord de la face avant située la plus haute, la branche de liaison étant disposée de sorte que sa section en « L » recouvre une arête de la poutre pare-chocs formée par l'angle entre la face supérieure et la face avant, l'une des branches du « L » recouvrant en partie la face supérieure et l'autre branche du « L » recouvrant la face avant.

C'est-à-dire que l'angle entre la face supérieure et la face avant de la poutre se place à l'intérieur de l'angle entre les deux branches du « L ». Ainsi avantageusement, la branche de liaison vient recouvrir une partie de la poutre de pare-chocs, et en particulier son angle entre la face supérieure et la face avant, de manière à réduire sa visibilité depuis l'extérieur du véhicule, notamment lorsqu'une calandre comportant des ouvertures laissant entrée l'air vers des systèmes de refroidissement situés derrière la poutre, sont disposés à l'avant du véhicule, devant l'armature. La branche de liaison peut être au contact de la poutre, ou être légèrement distante de celle-ci, c'est-à-dire à moins de deux centimètres, de préférence à moins d'un centimètre de celle-ci. Elle peut en variante être au contact de la poutre de pare-chocs.

Dans un autre mode de réalisation de l'invention, le véhicule comporte un capot avant mobile entre une position ouverte et une position fermée, le capot comportant des butées disposées chacune en vis-à-vis des surfaces frangibles.

L'invention sera mieux comprise à la lecture de la description qui va suivre, donnée uniquement à titre d'exemple et faite en se référant aux dessins annexés, sur lesquels :
[Fig.1] représente l'avant d'un véhicule comportant une poutre de pare-chocs et une armature de pare-chocs suivant l'invention, vue en transparence.
[Fig.2] représente une vue en perspective d'une armature de pare-chocs suivant l'invention.
[Fig.3] est une vue de dessus d'une partie de l'armature de pare-chocs montrant une des surfaces frangibles
[Fig.4] est une vue en section de l'armature au niveau d'une jambe d'appui, suivant plan vertical longitudinal au véhicule.

Les dessins sont des représentations schématiques pour faciliter la compréhension de l'invention. Les composants ne sont pas forcément représentés à l'échelle. Les mêmes références correspondent aux mêmes composants d'une figure à l'autre. L'axe X représente la direction longitudinale du véhicule, l'axe Y la direction transversale et l'axe Z la direction verticale. Les directions avant, arrière, haut, bas sont prises dans le référentiel du véhicule.

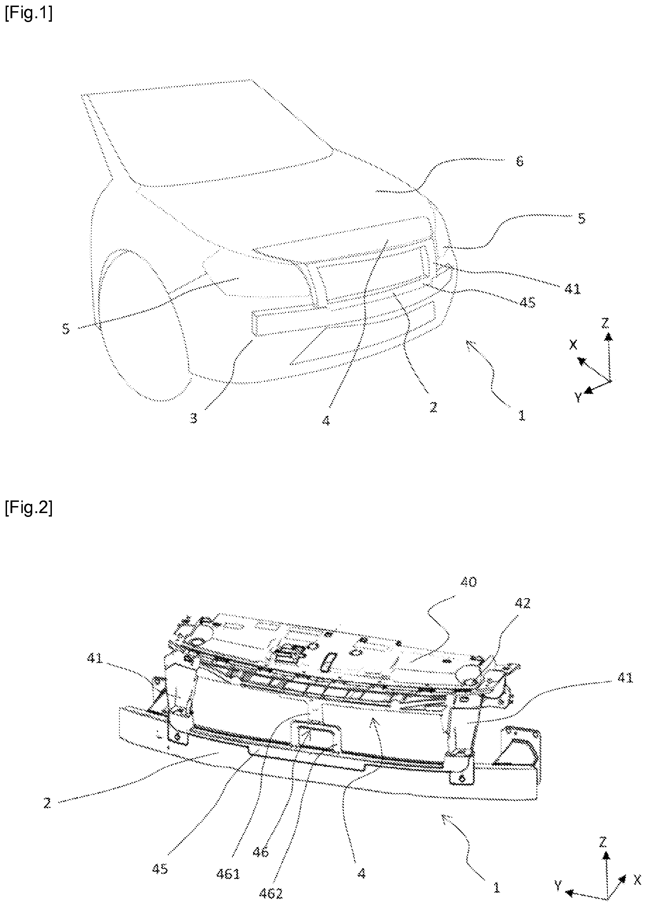

La figure 1 illustre un véhicule 1 comportant une armature 4 suivant l'invention. Le véhicule 1 comporte à l'avant une peau de pare-chocs 3 derrière laquelle est placée une poutre de pare-chocs 2 et l'armature de pare-chocs 4. Le véhicule 1 comporte des phares avant 5, et l'armature 4 est disposée au moins en partie entre ces phares 5. La peau 3 de pare-chocs est par exemple fixée sur l'armature 4. L'armature 4 comporte une paroi supérieure 40, deux jambes d'appuis 41 s'étendant toutes les deux du même côté de la paroi supérieure 40. Les deux jambes 41 d'appuis s'étendent dans un même plan non parallèle à la paroi supérieure 40. Les deux jambes d'appuis 41 s'appuient à la poutre 2 de pare-chocs et sont fixées à ladite poutre 2. La paroi supérieure 40 s'étend principalement dans un plan, et comporte deux surfaces frangibles 42 comme illustré en figure 2. Les deux surfaces frangibles sont disposées dans le prolongement de chacune des jambes d'appuis 41 et entourées chacune d'une zone frangible 43, 44. C'est-à-dire que lorsque l'on suit la direction des jambes d'appuis 41 sur la paroi supérieure, cette direction croise les surfaces frangibles 42. La prolongation des jambes d'appui est suivant un plan perpendiculaire au plan dans lequel s'étendent les deux jambes d'appuis 41.

Dans le mode de réalisation illustré dans les figures, les jambes d'appuis 41 s'étendent sensiblement perpendiculairement à la paroi supérieure 40, dans une direction verticale Z au véhicule 1, les surfaces d"appui croisent chacune un plan parallèle aux directions verticale Z et longitudinal X passant chacun par l'une des jambes d'appuis 41.

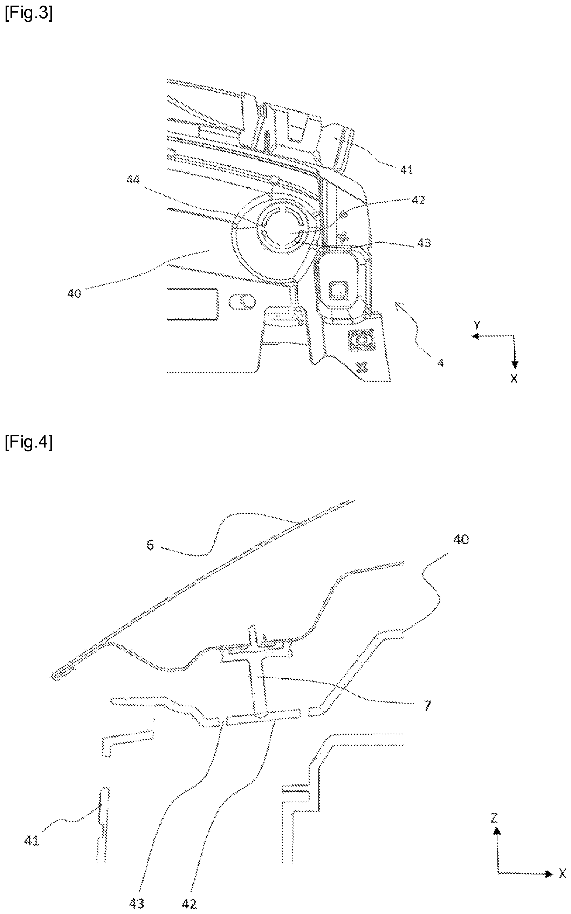

Comme illustré en figure 3, chacune des surfaces frangibles 42 sont des zones de la paroi supérieure 40 entourées de rainures 43 traversant la paroi supérieure 40 de part en part. Pour chaque surface frangible 42, plusieurs rainures 43 entourent ladite surface frangible 42, séparées entre elle par des pattes de fixation 44 frangibles reliant chacune des surfaces frangibles 42 à la paroi supérieur 40. Dans la figure 3, la surface frangible 42 est circulaire, et les rainures 43 forment un cercle autour de la surface frangible 42. La dimension des pattes frangibles est choisie de manière à se briser sous un effort donné perpendiculaire à la surface frangible 42.

Comme illustré en figure 2 et 4, les surfaces frangibles 42 et les zones frangibles 43, 44 les entourant sont dans des renfoncements de la paroi supérieure 40, formant des creux vers le coté de la paroi supérieure 40 dans lequel s'étendent des jambes d'appui 41. C'est-à-dire qu'une fois l'armature 4 installée sur le véhicule 1, les renfoncements forment des creux vers le bas du véhicule 1. Les rainures 43 étant traversant, l'eau s'écoulant dans les creux est évacuée en passant au travers de ces rainures 43. La forme de la paroi supérieure 40 est par exemple choisie de sorte que la majorité de l'eau tombant sur ladite paroi supérieure 40 soit orientée vers ces renfoncements.

Comme illustré en figure 1 et 2, les extrémités des jambes d'appuis 41 opposées à la paroi supérieure 40 sont reliées entre elles par une branche de liaison 45. La section de la branche de liaison 45 est de forme en « L ». C'est-à-dire que les extrémités des jambes d'appuis 41 fixées sur la poutre de pare-chocs 2 sont reliées entre elles par la branche de liaison 45. Une fois installée sur le véhicule 1, la branche de liaison 45 recouvre un angle de la poutre de pare-chocs 2. La poutre de pare-chocs comporte une face avant disposée face à l'avant du véhicule, et une face supérieure formant un angle supérieure droit avec cette face avant et disposée le long du bord de la face avant située la plus haute. La branche de liaison 45 est disposée de sorte que sa section en « L » recouvre cet angle supérieur entre la face supérieure et la face avant : l'une des branches du « L » recouvre en partie la face supérieure et l'autre branche du « L » recouvre la face avant. La branche de liaison 45 recouvre au moins 50% de la longueur de cet angle supérieur, entre les deux jambes d'appuis 41, ou au moins 80% ou encore en variante tout l'angle supérieur entre les deux jambes d'appuis 41. La branche de liaison 45 est au contact de la poutre, ou en variante elle peut être légèrement distante de celle-ci, c'est-à-dire à moins de 2 centimètre, ou encore à moins d'un centimètre de celle-ci. L'homme du métier identifiera la meilleure position en fonction de la forme de la poutre 2, afin de rendre le moins visible la poutre de pare-chocs 2 depuis l'extérieur du véhicule, par exemple au travers d'une calandre disposée en vis-à-vis de la poutre 2.

Afin de réduire la visibilité de l'armature 4, celle-ci est en matériau plastique noir. Ainsi, une fois installée derrière la peau de pare-chocs 3, l'armature 4 est peu visible au traverse d'une calandre avant, l'armature 4 étant dans une zone sombre.

L'espace entre les jambes d'appuis 41 permet de faire passer l'air en direction de système de refroidissement du système de propulsion du véhicule 1.

Comme illustré en figure 2, dans une variante, l'armature 4 comporte une jambe complémentaire 46 située entre les deux jambes d'appui 41, reliant la paroi supérieure 40 à la branche de liaison 45. La jambe complémentaire 46 comporte une section supérieure 461 formé d'une seule branche, reliée à la paroi supérieure 40, et une section inférieure 462 en forme de U inversé, dont la base du U est reliée à la section supérieure 461 et les extrémités des branches du U sont reliées à la branche de liaison 45. Cette jambe complémentaire 46 permet d'apporter un renfort à la paroi supérieure 40 entre les deux jambes d'appuis 41, par exemple au milieu de l'espacement entre les deux jambes 41. La jambe complémentaire 46 est alors par exemple dans le plan médian longitudinal du véhicule 1. La forme en U de la section inférieure 462 permet l'installation d'un capteur, par exemple un radar ou une caméra, ou un autre équipement, dans l'axe médian du véhicule, entre les branches du U.

Comme illustré en figure 4, le véhicule 1 comporte un capot avant 6, par exemple un capot moteur, mobile entre une position ouverte et une position fermée. Le capot 6 comporte des butées 7 disposées chacune en vis-à-vis des surfaces frangibles 42. Lorsque le capot 6 est en position fermée, les butées sont au contact des surfaces frangibles 42 afin de mettre légèrement en tension le capot et d'assurer un maintien en position fermée dudit capot 6, à l'aide d'une serrure de fermeture classiquement utilisée à cette effet, sans jeu et ainsi éviter la vibration du capot 6 lorsque le véhicule 1 roule. Les zones frangibles 43, 44 sont dimensionnées de sorte à résister au claquage du capot 6 lors de sa fermeture, mais de se briser lorsqu'un effet supérieur à un effort donné, relatif à un choc piéton par exemple, supérieur à l'effort liée au claquage du capot 6, est appliquée sur la surface frangible 42.

## Revendications

1. Armature (4) de pare-chocs comportant une paroi supérieure (40) s'étendant dans un plan, deux jambes d'appuis (41), destinées à s'appuyer à une poutre (2) de pare-chocs et s'étendant toutes les deux du même côté de la paroi supérieure (40), la paroi supérieure (40) comportant deux surfaces frangibles (42) disposées chacune dans le prolongement de chacune des jambes d'appuis (41) et entourées chacune d'une zone frangible (43, 44), **caractérisé en ce que** les extrémités des jambes d'appuis (41) opposées à la paroi supérieure (40) sont reliées entre elles par une branche de liaison (45), de section en « L » agencée de sorte que la section en « L » soit destinée à recouvrir une arête d'une poutre de pare-chocs (2).

2. Armature (4) suivant la revendication précédente, **caractérisée en ce que** les jambes d'appui (41) s'étendent dans une direction sensiblement perpendiculaire à la paroi supérieure (40).

3. Armature (4) suivant la revendication précédente, **caractérisée en ce que** chacune des surfaces frangibles (42) sont des zones de la paroi supérieure (40) entourées de rainures (43) traversant la paroi supérieure (40), lesdites rainures (43) étant séparées entre elle de sorte à former des pattes de fixation (44) frangibles reliant chacune des surfaces frangibles (42) à la paroi supérieure (40).

4. Armature (4) suivant la revendication précédente, dont les surfaces frangibles (42) et les zones frangibles (43, 44) entourant lesdites surfaces frangibles (42), sont dans des renfoncements de la paroi supérieure (40), formant des creux vers le coté de la paroi supérieure (40) dans lequel s'étendent les jambes d'appui (41).

5. Véhicule (1) comportant une poutre de pare-chocs (2) et une armature (4) de pare-chocs suivant l'une des revendications précédentes, **caractérisée en ce que** les extrémités des jambes d'appuis (41) sont fixées à la poutre (2) de pare-chocs.

6. Véhicule (1) suivant la revendication 5, comportant une armature (4) suivant l'une quelconque des revendications 1 à 4, dont la poutre (2) comporte une face avant orientée vers l'avant du véhicule (1), s'étendant sensiblement parallèlement à un axe vertical Z du véhicule (1), une face supérieure formant un angle, de préférence droit, avec la face avant et disposée le long du bord de la face avant située la plus haute, la branche de liaison (45) étant disposée de sorte que sa section en « L » recouvre une arête formée par l'angle entre la face supérieure et la face avant, l'une des branches du « L » recouvrant en partie la face supérieure et l'autre branche du « L » recouvrant la face avant.

7. Véhicule (1) suivant l'une des revendication 5 à 6, comportant un capot avant (6) mobile entre une position ouverte et une position fermée, le capot (6) comportant des butées (7) disposées chacune en vis-à-vis des surfaces frangibles (42).

## Patentansprüche

1. Stoßfängerarmatur (4) mit einer oberen Wand (40), die sich in einer Ebene erstreckt, zwei Stützbeine (41), die an einem Stoßfängerträger (2) abgestützt sind und sich beide auf der gleichen Seite der oberen Wand (40) erstrecken, wobei die obere Wand (40) zwei zerbrechbare Oberflächen (42) aufweist, die jeweils in der Verlängerung angeordnet sind Von jedem der Stützbeine (41), die jeweils von einem zerbrechlichen Bereich (43, 44) umgeben sind, **dadurch gekennzeichnet, dass** die der oberen Wand (40) gegenüberliegenden Enden der Stützbeine (41) durch einen Verbindungsschenkel (45) mit einem L-förmigen Querschnitt miteinander verbunden sind, der so angeordnet ist, dass der L-förmige Abschnitt eine einem Stoßfängerträger (2).

2. Bewehrung (4) nach dem vorhergehenden Anspruch, **dadurch gekennzeichnet, dass** die Stützbeine (41) sich in einer Richtung im Wesentlichen senkrecht zur oberen Wand (40) erstrecken.

3. Anker (4) nach dem vorhergehenden Anspruch, **dadurch gekennzeichnet, dass** jede der zerbrechbaren Oberflächen (42) Bereiche der oberen Wand (40) sind, die von Nuten (43) umgeben sind, die durch die obere Wand (40) hindurchgehen, wobei die Nuten (43) voneinander getrennt sind, um zerbrechbare Befestigungslaschen (44) zu bilden, die jede der Wand verbinden Oberteil (40).

4. Anker (4) nach dem vorhergehenden Anspruch, dessen zerbrechbare Oberflächen (42) und die die zerbrechbaren Oberflächen (42) umgebenden zerbrechbaren Bereiche (43, 44) sich in Vertiefungen der oberen Wand (40) befinden, die Vertiefungen zur Seite der oberen Wand (40) bilden, in der sich die Stützbeine (41) erstrecken.

5. Fahrzeug (1) mit einem Stoßfängerträger (2) und einem Stoßfängeranker (4) nach einem der vorhergehenden Ansprüche, **dadurch gekennzeichnet, dass** die Enden der Stützbeine (41) am Stoßfängerträger (2) befestigt sind.

6. Fahrzeug (1) nach Anspruch 5, mit einer Armatur (4) nach einem der Ansprüche 1 bis 4, deren Balken (2) eine nach vorn gerichtete Vorderseite des Fahrzeugs (1) aufweist, die sich im Wesentlichen parallel zu einer vertikalen Achse Z des Fahrzeugs (1) erstreckt, wobei eine Oberseite einen vorzugsweise rechten Winkel mit der Vorderseite bildet und entlang der Kante der obersten Vorderseite angeordnet ist, Der Verbindungsschenkel (45) ist so angeordnet, dass sein L-förmiger Querschnitt eine Kante überdeckt, die durch den Winkel zwischen der Oberseite und der Vorderseite gebildet ist, wobei einer der Schenkel des "L" die Oberseite teilweise überdeckt und der andere Schenkel des "L" die Vorderseite überdeckt.

7. Fahrzeug (1) nach einem der Ansprüche 5 bis 6 mit einer vorderen Abdeckung (6), die zwischen einer offenen und einer geschlossenen Position bewegbar ist, wobei die Abdeckung (6) Anschläge (7) aufweist, die jeweils den zerbrechbaren Flächen (42) gegenüberliegen.

## Claims

1. Frame (4) of bumpers with a top wall (40) extending in one plane, two supporting legs (41) intended to support one bumper beam (2) and extending both on the same side of the upper wall (40), the upper wall (40) having two frangible surfaces (42) arranged in each the extension of each of the supporting legs (41) and surrounded by each of a frangible zone (43, 44), **characterized by** the ends of the supporting legs (41) opposite the upper wall (40) being connected by a connecting branch (45), of section in "L" arranged so that the section in "L" is intended to cover one edge of a bumper beam (2).

2. Rebar (4) following the previous claim, characterized as the supporting legs (41) extend in a direction substantially perpendicular to the upper wall (40).

3. Rebar (4) following the previous claim, characterized that each of the frangible surfaces (42) are areas of the upper wall (40) surrounded by grooves (43) crossing the upper wall (40), the said grooves (43) being separated so as to form fastening legs (44) connecting each of the frangible surfaces (44) 2) on the upper wall (40).

4. Rebar (4) following the previous claim, of which the frangible surfaces (42) and the frangible areas (43, 44) surrounding the said frangible surfaces (42) are in recesses of the upper wall (40), forming hollows to the side of the upper wall (40) in which the supporting legs extend (41).

5. Vehicle (1) with a bumper beam (2) and a bumper frame (4) in accordance with one of the preceding claims, characterized as the ends of the supporting legs (41) are attached to the bumper beam (2).

6. Vehicle (1) following Claim 5, consisting of a rebar (4) following any of the Claims 1 to 4, whose beam (2) has a front face facing forward of the vehicle (1), extending substantially parallel to a vertical Z axis of the vehicle (1), with a top face forming an angle, preferably right, with the front face and arranged along the front edge of the vehicle (1) higher, the binding branch (45) being arranged so that its "L" section covers an edge formed by the angle between the upper face and the front face, one of the branches of the "L" partly covering the upper face and the other branch of the "L" covering the front face.

7. Vehicle (1) following one of Claim 5 to 6, with a front cover (6) moving between an open position and a closed position, the hood (6) having stops (7) placed in front of the frangible surfaces (42).
